(19) Europäisches Patentamt
European Patent Office
Office européen des brevets

(11) **EP 3 254 564 B1**

(12) **EUROPEAN PATENT SPECIFICATION**

(45) Date of publication and mention
of the grant of the patent:
**11.11.2020 Bulletin 2020/46**

(51) Int Cl.:
***A01N 57/32*** *(2006.01)*     ***A01N 43/78*** *(2006.01)*
***A01P 5/00*** *(2006.01)*

(21) Application number: **16746538.4**

(86) International application number:
**PCT/JP2016/052696**

(22) Date of filing: **29.01.2016**

(87) International publication number:
**WO 2016/125707 (11.08.2016 Gazette 2016/32)**

(54) **Pesticidal compositions and methods for controlling pests**

Pestizide Zusammensetzungen und Verfahren zur Schädlingsbekämpfung

Compositions pesticides et méthodes de lutte contre les parasites

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Validation States:
**MA**

(30) Priority: **06.02.2015 JP 2015021823**

(43) Date of publication of application:
**13.12.2017 Bulletin 2017/50**

(73) Proprietor: **Ishihara Sangyo Kaisha, Ltd.
Osaka-shi, Osaka 550-0002 (JP)**

(72) Inventor: **YOSHIMURA, Hideshi
Osaka-shi, Osaka 550-0002 (JP)**

(74) Representative: **Blodig, Wolfgang
Wächtershäuser & Hartz
Patentanwaltspartnerschaft mbB
Weinstrasse 8
80333 München (DE)**

(56) References cited:
WO-A1-01/02378          WO-A1-2014/007265
CN-A- 104 522 049       JP-A- S6 157 591
JP-A- H01 238 505       JP-A- H04 217 991
JP-A- S58 501 378       US-A1- 2014 005 047

• SATOKO WADA ET AL: "Effect of Three
Organophosphorous Nematicides on Non-target
Nematodes and Soil Microbial Community",
MICROBES AND ENVIRONMENTS, vol. 23, no. 4,
1 January 2008 (2008-01-01), pages 331-336,
XP055031295, ISSN: 1342-6311, DOI:
10.1264/jsme2.ME08534
• OKA, YUJI ET AL.: 'Influence of soil environments
on nematicidal activity of fluensulfone against
Meloidogyne javanica' PEST MANAG SCI vol. 69,
no. 11, 01 March 2013, pages 1225 - 1234,
XP055475274 DOI: 10.1002/PS.3487
• KEARN, JAMES ET AL.: 'Fluensulfone is a
nematicide with a mode of action distinct from
anticholinesterases and macrocyclic lactones'
PESTICIDE BIOCHEMISTRY AND PHYSIOLOGY
vol. 109, 01 February 2014, pages 44 - 57,
XP055456236 DOI:
10.1016/J.PESTBP.2014.01.004

**Description**

TECHNICAL FIELD

The present invention relates to a pesticidal composition and a method for controlling pests.

BACKGROUND ART

Fosthiazate, imicyafos and cadusafos are organic phosphorus compounds as active ingredients of commercially available nematicides, and are compounds disclosed, respectively, in Patent Documents 1, 2 and 3. And, fluensulfone is a compound disclosed as Compound No. 3 in Patent Document 4.
In Patent Document 5, a pesticide comprising fosthiazate and tetoradinen being a sulfone-type compound, as active ingredients, is described, but a combination of fosthiazate and fluensulfone is not disclosed.

PRIOR ART DOCUMENTS

PATENT DOCUMENTS

Patent Document 1: U.S. Patent No. 4,590,182
Patent Document 2: U.S. Patent No. 5,405,961
Patent Document 3: U.S. Patent No. 4,535,077
Patent Document 4: JP-A-2001-19685
Patent Document 5: JP-A-1-238505

WO 01/02378 A1 discloses trifluorobutenes and their use as nematicides.

DISCLOSURE OF INVENTION

TECHNICAL PROBLEM

Currently, many pesticidal compositions have been developed and used, but they are not necessarily sufficient to control pests in some cases, and development of a highly active pesticidal composition has been desired. Particularly with respect to controlling of nematodes, development of a highly active pesticidal composition having effects superior to existing agents has been desired.

SOLUTION TO PROBLEM

The present inventors have conducted extensive studies, and as a result, they have found that a highly active pesticidal composition can be obtained by combining specific compounds and have accomplished the present invention.
That is, the present invention relates to a pesticidal composition (hereinafter referred to also as the composition of the present invention) comprising, as active ingredients, (A) at least one organic phosphorus compound selected from the group consisting of fosthiazate and imicyafos (hereinafter referred to also as compound A), and (B) fluensulfone (hereinafter referred to also as compound B). Further, the present invention relates to a method for controlling pests, which comprises applying a pesticidally effective amount of (A) at least one organic phosphorus compound selected from the group consisting of fosthiazate and imicyafos, and a pesticidally effective amount of (B) fluensulfone, to the pests or to a habitat of the pests.

ADVANTAGEOUS EFFECTS OF INVENTION

According to the present invention, it is possible to provide a pesticidal composition which has a wide pesticidal spectrum, is highly active and capable of reducing the application rate of the active ingredient, and has a long lasting effect.

DESCRIPTION OF EMBODIMENTS

Each of fosthiazate and imicyafos has an optical isomer, and in the present invention, either one or both of the optically active substance and the racemate are included.

The mixing (content) ratio of compound A to compound B in the composition of the present invention cannot be generally defined, as it is required to be suitably adjusted depending upon the type of the formulation, the application method, the weather conditions, the type and the situation of emergence of pests to be controlled, etc., but it is, for example, from 1:0.01 to 30, preferably from 1:0.05 to 20, by weight ratio. Particularly when compound A is fosthiazate, the mixing ratio is preferably from 1:0.05 to 20, more preferably from 1:0.1 to 10, by weight ratio.

The composition of the invention may be applied in an active ingredient concentration of, for example, from 0.1 to 100,000 ppm, preferably from 10 to 100,000 ppm, more preferably from 100 to 10,000 ppm. The active ingredient concentration may be properly be adjusted depending upon the mixing ratio of compound A to compound B, the type of the formulation, the application method, the weather conditions, the type and the situation of emergence of pests to be controlled, etc.

The amounts of application (pesticidally effective amounts) of compound A and compound B per unit area, cannot be generally defined in the same manner as described above, but, for example, the amount of compound A is from 200 to 10,000 g/ha, preferably from 500 to 5,000 g/ha, and the amount of compound B is from 200 to 10,000 g/ha, preferably from 500 to 5,000 g/ha.

When the composition of the present invention is to be applied, either application to the pests, or application to a habitat of the pests may be selected, but application to a habitat of the pests is preferred, and particularly, application to soil is more preferred. And, it is possible to select various application forms, such as soil incorporation treatment, planting hole treatment, in-furrow application, drenching, etc. Further, it is also possible to select an application form such as impregnation, coating or powdering on seeds or bulbs of crop plants. Further, in the present invention, pesticidally effective amounts of compound A and compound B may be applied in accordance with the above-mentioned application forms, and at that time, compound A and compound B may be applied simultaneously, or either one may be applied first, followed by application of the other.

The composition of the present invention can control various pests such as nematodes, isopods, coleopteran insects, lepidopteran insects, gastropods, orthopteran insects, plant-parasitic mites, thrips, dipteran insects, hymenopteran insects, Siphonaptera, anopluran insects, isoptera insects, hemipteran insects, Oniscoidea, centipedes and millipedes. Further, it is also effective for controlling pests which damage agricultural and horticultural crop plants, trees, etc. in soil, and pests which damage seeds of agricultural and horticultural crop plants and trees, such as the above-mentioned nematodes, isopods, coleopteran insects, lepidopteran insects, gastropods, orthopteran insects, plant-parasitic mites and hemipteran insects. Particularly with respect to control of nematodes among these pests, the composition of the present invention shows remarkably excellent controlling effects as compared with a case where compound A and compound B are respectively used independently. Specific examples of various pests are shown below.

The nematodes may, for example, be root-lesion nematode such as Pratylenchus coffeae, Pratylenchus fallax, Pratylenchus loosi and Pratvlenchus vulnus; cyst nematode such as soybean cyst nematode (Heterodera glycines) and potato cyst nematode (Globodera rostochiensis); root-knot nematode such as Meloidogyne hapla and southern root-knot nematode (Meloidogyne incognita); Aphelenchoides such as rice white-tip nematode (Aphelenchoides bessevi) and Aphelenchoides fragarieae; Tylenchorhynchus; Criconematidae; Pratylenchus; Longidoridae; Trichodorus; strawberry bud nematode (Ditylenchus acris) and pine wood nematode (Bursaphelenchus xylophilus). The composition of the present invention shows an excellent effect for controlling at least one member selected from the group consisting of root-lesion nematodes, cyst nematodes and root-knot nematodes, among them.

The isopods may, for example, be wood louses (Armadillidium vulgare) and sow bugs (Porcellio scaber).

The coleopteran insects may, for example, be corn rootworms such as Western corn rootworm (Diabrotica virgifera virgifera) and Southern corn rootworm (Diabrotica undecimpunctata howardi); scarab beetles such as Anomala cuprea and Anomala rufocuprea; weevils such as Sitophiluszeamais, Echinocnemus squameus, Cvlas formicarius, Lissorhoptrus oryzophilus, Hypera pastica, and Callosobruchuys chienensis; hairworms such as Melanotus okinawensis, Agriotes ogurae fusciollis and Melanotus legatus; mealworms such as Tenebrio molitor and Tribolium castaneum; leaf bettles such as Aulacophora femoralis, Phyllotreta striolata and Leptinotarsa decemlineata; Epilachna such as Epilachna vigintioctopunctata; Bostrychidae; and Paederus fuscipes.

The lepidopteran insects may, for example, be Pyralidae such as Chilo suppressalis, Cnaphalocrocis medinalis, Ostrinia nubilalis, Parapediasia teterrella, Notarcha derogata and Plodia interpunctella; owlet moths such as Spodoptera litura, Pseudaletia separata, Mamestra brassicae, Agrotis ipsilon, Trichoplusia, Heliothis and Helicoverpa; Pieridae such as Pierisrapae; Tortricidae such as Adoxophyes, Grapholita molesta and Cydia pomonella; Carposinidae such as Carposina niponensis; Lyonetiidae such as Lyonetia; Lymantriidae such as Lymantria and Euproctis; Yponomeutidae such as Plutellaxylostella; Gelechiidae such as pink bollworm (Pectinophora gossypiella); Arctiidae such as fall webworm (Hyphantria cunea); and Tineidae such as casemaking clothes moth (Tinea translucens) and Tineola bisselliella.

The gastropods may, for example, be snails and slugs.

The orthopteran insects may, for example, be mole crichet (Gryllotalpa africana), Asiatic locust (Locusta migratoria migratoriodes), German cockroach (Blattella germanica), Periplaneta fuliginosa, American cockroach (Periplaneta americana), Periplaneta brunnea and Blatta orientalis.

The plant-parasitic mites may, for example, be two-spotted spider mite (Tetranychus urticae), carmine spider mite (Tetranychus cinnabarinus), citrus red mite (Panonychus citri) and bulb mite (Rhizoglyphus echinopus).

The thrips may, for example, be thrips (Thrips palmi), Thrips tabaci, Thrips hawaiiensis, yellow tea thrips (Scirtothrips dorsalis), Frankliniella intonsa, western flower thrips (Frankliniella occidentalis) and Ponticulothrips diospyrosi.

The dipteran insects may, for example, be Culex such as Culex pipiens pallens and Culex tritaeniorhynchus; Aedes such as Aedes aegypti and Aedes albopictus; Anopheles such as Anopheles sinensis; Chironomus; Musca such as muscid fly (Musca domestica and Muscina stabulans); Calliphoridae; Sarcophagidae; Fannia; Anthomyia such as Deliaplatura and Delia antiqua; Agromyzidae such as legume leafminer (Liriomyza trifolii); Tephitidae; Drosophila; Psychodidae; Simuliidae; Tabanus; and stomoxiid flies (Stomoxys sp.)

The hymenopteran insects may, for example, be ants; Polistinae; hornets (Vespa sp.); Bethylidae; Tenthredinidae such as Athalia rosae; and Argidae such as Arge pagana.

The Siphonaptera may, for example, be Ctenocephalides felis, Ctenocephalides canis and Pulex irritans.

The anopluran insects may, for example, be Pediculus humanus corporis, Phthirus pubis and human louse (Pediculus humanus humanus).

The isoptera insects may, for example, be termites (Reticulitermes speratus) and formosan subterranean termite (Coptotermes formosanus).

The hemipteran insects may, for example, be Delphacidae such as small brown planthopper (Laodelphax striatellus), brown rice planthopper (Nilaparvata lugens) and whitebacked planthopper (Sogatella furcifera); Deltcephalidae such as green rice leafhopper (Nephotettix cincticeps) and Nephotettix virescens; aphids such as cotton aphid (Aphis gossypii), green peach aphid (Mvzus persicae), Aphis citricola, turnip aphid (Lipaphis psedobrassicas), Nippolachnus piri, Toxoptera aurantii and Toxoptera ciidius; bugs (Heteroptera) such as Nezara antennata, Cletus punctiger, bean bug (Riptortus clavatus) and Plautia stali; whiteflies such as greenhouse whitefly (Trialeurodes vaporariorum), sweetpotato whitefly (Bemisia tabaci) and silverleaf whitefly (Bemisia argentifolii); scale insects such as Aonidiella aurantii, San Jose scale (Comstockaspis perniciosa), citrus snow scale (Unaspis citri), Pseudaulacaspis pentagona, Saissetia oleae, Lepidosaphes beckii, Ceroplastes rubens and Icerva purchase; Tingitidae; and Psyllidae.

The sow bugs may, for example, be Porcellio scaber, Porcellionides pruinosus and Armadillidium vulgare.

The centipedes may, for example, be Scolopendra subspinipes mutilans, Scolopendra subspinipes japonica, Scolopendra subspinipes multidens and Thereuopoda hilgendorfi.

The millipedes may, for example, be Oxidus gracilis and Parafontarialaminata laminate.

The composition of the present invention may be mixed with or may be used in combination with other agricultural chemicals such as insecticides, miticides, nematicides, fungicides, antivirus agents, attractants, herbicides, plant growth regulating agents, etc., whereby more excellent effects may sometimes be obtained. For example, the application range, the application time, the pesticidal activities, etc. may be improved to preferred directions.

The composition of the present invention may be prepared by mixing compound A and compound B as active ingredients with various additives in accordance with conventional formulation methods for agricultural chemicals, and applied in various formulations such as dusts, microgranules F, microgranules, granules, water dispersible granules, wettable powders, tablets, pills, capsules (including a formulation packaged by a water soluble film), microcapsules, water-based suspensions, oil-based suspensions, microemulsions, suspoemulsions, water soluble powders, emulsifiable concentrates, soluble concentrates, pastes or aerosols. That is, it may be formulated into any formulation which is commonly used in this field, so long as the object of the present invention is thereby met. Further, among the above soil applications, the soil incorporation, the planting hole application and the in-furrow application are carried out preferably in formulations of dusts, microgranules F, microgranules, granules, tablets or pills. Further, drenching is carried out preferably in formulations of water dispersible granules, wettable powders, microcapsules, water-based suspensions, oil-based suspensions, water soluble powders or soluble concentrates. At the time of the formulation, compound A and compound B may be mixed together for the formulation, or they may be separately formulated so that they are mixed for use at the time of application.

The additives to be used for the formulation include, for example, a solid carrier such as kaolinite, sericite, diatomaceous earth, slaked lime, calcium carbonate, talc, white carbon, kaoline, bentonite, clay, sodium carbonate, sodium bicarbonate, mirabilite, zeolite, alumina, sulfur dust, starch, activated carbon, soybean flour, wheat flour, wood flour, fish meal or milk powder; a solvent such as water, toluene, xylene, trimethylbenzene, tetramethylbenzene, cyclohexane, solvent naphtha, acetone, methyl ethyl ketone, dioxane, tetrahydrofuran, kerosene, fuel oil, chloroform, chlorobenzene, ethyl acetate, a fatty acid glycerin ester, acetonitrile, dimethylsulfoxide, N,N-dimethylformamide, dimethylacetamide, N-methyl-2-pyrrolidone, an alcohol or ethylene glycol; an anionic surfactant such as a salt of fatty acid, a benzoate, a polycarboxylate, a salt of alkylsulfuric acid ester, an alkyl sulfate, an alkylaryl sulfate, an alkyl diglycol ether sulfate, a salt of alcohol sulfuric acid ester, an alkyl sulfonate, an alkylaryl sulfonate, an aryl sulfonate, a lignin sulfonate, an alkyldiphenylether disulfonate, a polystyrene sulfonate, a salt of alkylphosphoric acid ester, an alkylaryl phosphate, a styrylaryl phosphate, a salt of polyoxyethylene alkyl ether sulfuric acid ester, a polyoxyethylene alkylaryl ether sulfate, a salt of polyoxyethylene alkylaryl ether sulfuric acid ester, a polyoxyethylene alkyl ether phosphate, a salt of polyoxyethylene alkylaryl phosphoric acid ester, a salt of polyoxyethylene aryl ether phosphoric acid ester, a naphthalene sulfonic acid condensed with formaldehyde or a salt of alkylnaphthalene sulfonic acid condensed with formaldehyde; a nonionic surfactant such as a sorbitan fatty acid ester, a glycerin fatty acid ester, a fatty acid polyglyceride, a fatty acid alcohol polyglycol ether, acetylene glycol, acetylene alcohol, an oxyalkylene block polymer, a polyoxyethylene alkyl ether, a polyoxyethylene alkylaryl ether, a polyoxyethylene styrylaryl ether, a polyoxyethylene glycol alkyl ether, polyethylene glycol, a polyoxyethylene fatty acid ester, a polyoxyethylene sorbitan fatty acid ester, a polyoxyethylene glycerin fatty acid ester, a polyoxyethylene hydrogenated castor oil or a polyoxypropylene fatty acid ester; and a vegetable oil or mineral oil such as olive oil, kapok oil, castor oil, palm oil, camellia oil, coconut oil, sesame oil, corn oil, rice bran oil, peanut oil, cottonseed oil, soybean oil, rapeseed oil, linseed oil, tung oil or liquid paraffins. These additives may suitably be selected for use alone or in combination as a mixture of two or more of them, so long as the object of the present invention is met. Further, additives other than the above-mentioned may be suitably selected for use among those known in this field. For example, various additives commonly used, such as a filler, a thickener, an anti-settling agent, an anti-freezing agent, a dispersion stabilizer, a safener, an anti-mold agent, a bubble agent, a disintegrator and a binder, may be used. The mixing ratio by weight % of the active ingredients to such various additives in the composition of the present invention may be from 0.01:99.99 to 99:1, preferably from about 0.5:99.5 to about 95:5.

As a method of applying the composition of the present invention, a proper method can be employed among various methods depending upon various conditions such as the application site, the type of the formulation, and the type and the situation of emergence of pests to be controlled, and for example, the following methods may be mentioned.

1. Compound A and compound B are formulated together, and the formulation is applied as it is.
2. Compound A and compound B are formulated together, and the formulation is diluted to a predetermined concentration with e.g. water, and as the case requires, mixed with a spreader (such as a surfactant, a vegetable oil, a mineral oil) and applied.
3. Compound A and compound B are separately formulated, and the formulations are applied as they are.
4. Compound A and compound B are separately formulated, and as the case requires, the formulations are diluted to predetermined concentrations with e.g. water, and as the case requires, mixed with a spreader (such as a surfactant, a vegetable oil or a mineral oil) and applied.
5. Compound A and compound B are separately formulated, and the formulations are mixed when diluted to predetermined concentrations with e.g. water, and as the case requires, mixed with a spreader (such as a surfactant, a vegetable oil or a mineral oil) and applied.

The composition and the method for controlling pests of the present invention have synergistic pesticidal activity. This synergistic activity is based on a synergistic effect unexpected from pesticidal activities of the respective compounds, and according to the present invention, the pesticidal effect particularly the soil pesticidal effect is clearly enhanced, and a rapid-acting effect may sometimes be imparted, as compared with a case where the respective active ingredients are applied individually.

EXAMPLES

Now, the present invention will be described in further detail with reference to Examples. However, it should be understood that the present invention is by no means restricted to such specific Examples.

TEST EXAMPLE 1

About 50 larvae at second stage juveniles of southern root-knot nematode (Meloidogyne incognita) were immersed in a chemical solution diluted to a predetermined concentration with distilled water and kept for 24 hours in a constant temperature room at 25°C. Under observation by a microscope, the total number (A) of individuals of Meloidogyne incognita in the chemical solution and the number (B) of individuals which did not move for 15 seconds in the chemical solution, were investigated. Also with respect to a control plot using distilled water instead of the chemical solution, the total number (A') of individuals and the number (B') of individuals which did not move for 15 seconds, were investigated. From these values, the mobility inhibition rate was determined by the following formula. The results are shown in Table 1.

$$\text{Mobility inhibition rate (\%)} = [1 - \{(1-B/A)/(1-B'/A')\}] \times 100$$

Further, a theoretical value (%) of the mobility inhibition rate was calculated by the Colby's formula and is also shown in brackets ( ) in Table 1. The measured value (%) of the mobility inhibition rate is higher than the theoretical value (%), and thus, the composition of the present invention has a synergistic effect for controlling nematode.

TABLE 1: Mobility inhibition rate (%)

| | | Fluensulfone | | | | | |
|---|---|---|---|---|---|---|---|
| | | 5 ppm | 2.5 ppm | 1.25 ppm | 0.63 ppm | 0.31 ppm | 0 ppm |
| Fosthiazate | 5 ppm | 100 (98.8) | 100 (98.3) | 100 (98.0) | 99.2 (97.8) | 100 (97.6) | 96.2 |
| | 2.5 ppm | 100 (86.3) | 100 (79.9) | 100 (77.0) | 100 (74.2) | 100 (71.8) | 55.7 |
| | 1.25 ppm | 100 (76.1) | 100 (65.0) | 99.2 (59.9) | 100 (54.9) | 98.6 (50.8) | 22.7 |
| | 0.63 ppm | 100 (73.7) | 99.2 (61.5) | 99.1 (55.9) | 98.5 (50.4) | 99.1 (45.9) | 15.0 |
| | 0.31 ppm | 100 (69.2) | 99.0 (54.8) | 100 (48.2) | 95.6 (41.8) | 89.5 (36.5) | 0.2 |
| | 0 ppm | 69.1 | 54.7 | 48.1 | 41.7 | 36.4 | 0 |

TEST EXAMPLE 2

1 Liter of sand soil obtained by mixing paddy steam sterilization soil, sand soil and soil contaminated with southern root-knot nematode (Meloidogyne incognita) in a volume ratio of 2:2:1, was put into a 1/1,000,000 ha pot, and predetermined amounts of test agents were added and mixed. Immediately after addition of the test agents, the mixture was sufficiently mixed, and then, seedlings of tomato (cultivar: kyoryoku bei ju) were transplanted. On the 35th day after transplantation, the root knot index (0 to 100%) formed by nematode was visually determined. The test was carried out by two replications.

As test results, the root knot index based on the root knot index in the non-treated area being 100 is shown in Table 2. Further, a theoretical value determined by the Colby's formula is shown in brackets () in Table 2.

TABLE 2

| | | Average root knot index (theoretical value) | |
|---|---|---|---|
| | | Fosthiazate | |
| | | 3000 g/ha | 0 g/ha |
| Fluensulfone | 2500 g/ha | 0.0 (2.9) | 25.7 |
| | 0 g/ha | 11.4 | 100 |

TEST EXAMPLE 3

Soil contaminated with southern root-knot nematode (Meloidogyne incognita) was put in a 200 ml polypropylene cup, and predetermined amounts of test agents were added and mixed. Immediately after the addition of the test agents, the mixture was thoroughly mixed and then seeded with three seeds of cucumber. On the 26th day after seeding, the root knot index (0 to 100%) formed by nematode was visually determined.

As the test results, from the root knot index based on the root knot index in the non-treated area being 100, the control value (= 100 - the root knot index) was calculated, and the results are shown in Tables 3 and 4. Further, a theoretical value obtained by the Colby's formula (= Control value of compound A + Control value of compound B - ((Control value of compound A × Control value of compound B)/100)) is also shown in brackets () in Tables 3 and 4.

TABLE 3

| | | Control value (theoretical value) | | | | | |
|---|---|---|---|---|---|---|---|
| | | Fosthiazate | | | | | |
| | | 500 g/ha | 375 g/ha | 250 g/ha | 188 g/ha | 125 g/ha | 0 g/ha |
| Fluensulfone | 200 g/ha | 100 (97.3) | 100 (97.3) | 100 (95.5) | 96.7 (92.9) | 95.0 (92.0) | 73.3 |
| | 0 g/ha | 90.0 | 90.0 | 83.3 | 73.3 | 70.0 | 0.0 |

TABLE 4

| | | Control value (theoretical value) | | | | |
|---|---|---|---|---|---|---|
| | | Imicyafos | | | | |
| | | 375 g/ha | 250 g/ha | 188 g/ha | 125 g/ha | 0 g/ha |
| Fluensulfone | 200 g/ha | 100 (97.3) | 100 (96.0) | 96.7 (89.3) | 90.0 (88.4) | 73.3 |
| | 0 g/ha | 90.0 | 85.0 | 60.0 | 56.7 | 0.0 |

INDUSTRIAL APPLICABILITY

According to the present invention, it is possible to provide a pesticidal composition which has a wide pesticidal spectrum, is highly active and capable of reducing the application rate of the active ingredient, and has a long lasting effect.

**Claims**

1. A pesticidal composition comprising, as active ingredients, (A) at least one organic phosphorus compound selected from the group consisting of fosthiazate and imicyafos, and (B) fluensulfone.

2. The pesticidal composition according to Claim 1, wherein the organic phosphorus compound (A) is fosthiazate.

3. A non-therapeutic method for controlling pests, which comprises applying a pesticidally effective amount of the composition as defined in Claim 1 to the pests or to a habitat of the pests.

4. The method according to Claim 3, wherein the pests are nematodes.

5. The method according to Claim 4, wherein the nematodes are at least one member selected from the group consisting of root-lesion nematodes, cyst nematodes and root-knot nematodes.

**Patentansprüche**

1. Pestizidzusammensetzung, umfassend, als aktive Inhaltsstoffe, (A) mindestens eine organische Phosphorverbindung ausgewählt aus der Gruppe bestehend aus Fosthiazat und Imicyafos, und (B) Fluensulfon.

2. Die Pestizidzusammensetzung gemäß Anspruch 1, worin die organische Phosphorverbindung (A) Fosthiazat ist.

3. Nichttherapeutische Methode zur Bekämpfung von Schädlingen, welche die Anwendung einer für die Schädlingsbekämpfung wirksamen Menge der Zusammensetzung wie in Anspruch 1 definiert auf die Schädlinge oder auf einen Lebensraum der Schädlinge umfasst.

4. Die Methode gemäß Anspruch 3, worin die Schädlinge Nematoden sind.

5. Die Methode gemäß Anspruch 4, worin die Nematoden mindestens ein Mitglied ausgewählt aus der Gruppe bestehend aus Wurzelläsionsnematoden, Zystennematoden und Wurzelknotennematoden sind.

**Revendications**

1. Composition pesticide comprenant, en tant que principes actifs, (A) au moins un composé du phosphore organique choisi dans le groupe constitué par le fosthiazate et l'imicyafos, et (B) de la fluensulfone.

2. Composition pesticide selon la revendication 1, dans laquelle le composé du phosphore organique (A) est le fosthiazate.

3. Procédé non thérapeutique pour lutter contre des nuisibles, qui comprend l'application d'une quantité efficace du point de vue pesticide de la composition telle que définie dans la revendication 1 sur les nuisibles ou un habitat des nuisibles.

4. Procédé selon la revendication 3, dans lequel les nuisibles sont des nématodes.

5. Procédé selon la revendication 4, dans lequel les nématodes sont au moins un membre choisi dans le groupe constitué par les nématodes des racines, les nématodes à kyste, et les nématodes de la nodosité des racines.

**EP 3 254 564 B1**

**REFERENCES CITED IN THE DESCRIPTION**

**Patent documents cited in the description**

- US 4590182 A
- US 5405961 A
- US 4535077 A
- JP 2001019685 A
- JP 1238505 A
- WO 0102378 A1